# EUROPEAN PATENT APPLICATION

(11) **EP 2 348 292 A1**
(43) Date of publication of application: **27.07.2011**
(21) Application number: 10000239.3
(22) Date of filing: 13.01.2010
(51) Int. Cl.: G01F 1/692

(54) **Sensor device**

(71) Applicant: Sensirion AG, 8712 Stäfa (CH)
(72) Inventor: Hornung, Mark, 8712 Stäfa (CH); Gerner, Pascal, 8006 Zürich (CH); Mayer, Felix, 8712 Stäfa (CH)
(74) Representative: Toleti, Martin

(57) **Abstract**

Semiconductor sensor device with a membrane (5) to be operated in a chemically aggressive environment. While the sensor device provides for a first coating (9) under tensile stress, that compensates for e.g. thermally induced compressive stress in the membrane (5) as a result of manufacturing, a second coating (11) is meant to protect the membrane (5) against the environment. For such protection, the second coating (11) is under compressive stress, however, the combined stress of first and second coating (9,11) is of tensile character such that any compressive stress in the membrane (5) still can be compensated. Preferably, both coatings (9,11) comprise silicon nitride.

## Description

### Technical Field

The present invention relates to a sensor device, its use, and a method for its manufacture.

### Background Art

The trend of miniaturization and integration not only affects electronic circuits but also sensors. While conventional sensors were often built from discrete components and connected to electric circuits by means of leads new sensor devices are built on substrates which substrates most often carry electronic circuits embodied by semiconducting structures built on such a common substrate.

Sensor devices can be embodied for measuring flow, temperature, pressure, or other measures. Measuring elements for such sensor devices may be thermo-couplers or the like. A preferred location for arranging measuring elements in such sensor devices is on a membrane. The rationale for arranging a measuring element on a membrane may be one or more of the membrane being part of the measuring system, e.g. the membrane being deflected and allowing for measuring pressure, the membrane being accessible from the backside for processing purposes, or the membrane being advantageously decoupled from the substrate for improving measurement results.

As long as the sensor device provides an associate integrated circuit, a membrane of the sensor device most often is formed by layers of one or more of semiconducting, insulating and conductive material which layers are deposited for building the integrated circuit. The membrane can be regarded as sort of a by-product as it can be processed simply by removing the substrate in the subject area.

However, during the manufacturing process the layers and the substrate may be heated and cooled down to different temperatures and consequently may show different temperature induced behaviour during such processing steps. A typical problem addressed in PCT Application WO 02/055967 A1 is that in a cooling down phase the substrate may contract more than the layers on top of it which results in a compressive stress in the layers which also build the membrane. As a result, the membrane may no longer show planar shape but may be bent, which effect is called buckling. WO 02/055967 A1 teaches a coating with an inherent tensile stress to be deposited on top of the membrane in order to compensate for the compressive stress induced in the membrane during processing.

While the above International Application does raise the need for an additional protective layer embodied as a silicon nitride layer for protecting electronic components of the integrated circuit, it explicitly discourages from covering the membrane with such protective layer due to the compressive properties of such protective layer which otherwise would re-compensate for the effects evoked by the tensile coating. Consequently, provision of such silicon nitride layer as protective means is restricted to areas outside the membrane. On the other hand, the protective effect of the tensile coating may not be sufficient subject to the medium protection should be sought from.

### Summary of the Invention

The problem to be solved by the present invention is therefore to provide a sensor device which improves protection of the membrane against damaging impact. Such impact may result from the medium to be measured itself if, for instance, such medium exhibits chemically aggressive properties as ammonia does.

This problem is solved by a sensor device according to the features of independent claim 1.

In addition to the first coating under tensile stress, the sensor device comprises a second coating under compressive stress. The second coating comprises silicon nitride. The first and the second coatings are designed such that a combined stress of the first and the second coating is of tensile nature in order to compensate for compressive stress induced into the membrane.

The resulting sensor device not only compensates for compressive stress induced into the membrane, but also protects the membrane and components arranged on or in the membrane against chemically aggressive environments. The protective property is owed to the compressive nature of the second coating which leads to a high density in such coating. The high density, in turn, prevents from pinholes in the coating by that making the second coating less porous for damaging media such that underlying structures are protected. In case of an arrangement of the compressive coating on top of the tensile coating the tensile coating may have pinholes owed to its tensile nature for the reason that the compressive coating provides protection.

In a preferred embodiment, the second coating extends over at least a part of or even the entirety of an integrated circuit arranged in a semiconductor device. Hence, a single second coating may protect the membrane and such integrated circuit from an aggressive environment in cases where the membrane and an integrated circuit are integrated in a common semiconductor device.

For other advantageous embodiments it is referred to the dependent claims. Many of the embodiments relate to the design of a stack of coatings and membrane, or to the compressive / tensile properties of the respective coatings.

### Brief Description of the Drawings

A number of embodiments of the present invention will now be described by way of example only and with reference to the accompanying drawings, in which the figures show:
Fig. 1 a top view of a sensor device according to an embodiment of the present invention,
Fig. 2 a cross-sectional view of the sensor device according to Figure 1 along the lines II-II,
Fig. 3 a cross-sectional view of a stack of a sensor device according to an embodiment of the present invention,
Fig. 4 a cross-sectional view of another stack of a sensor device according to an embodiment of the present invention,
Fig. 5 a cross-sectional view of another stack of a sensor device according to an embodiment of the present invention, and
Fig. 6 a cross-sectional view of another stack of a sensor device according to an embodiment of the present invention.

### Detailed Description of the Invention

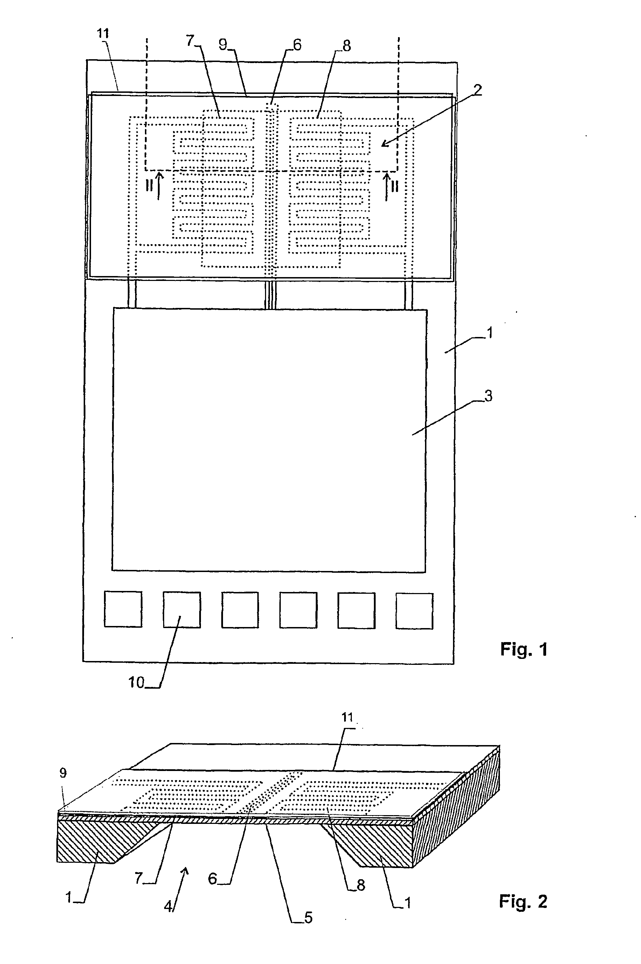

Fig. 1 and its cross-sectional representation in Fig. 2 illustrate an exemplary embodiment of a sensor device according to the invention. The sensor device illustrated represents a flow sensor for measuring a flow of liquid or gas passing the sensor device.

The sensor device is formed by a semiconductor device. Both, a measuring element 2 and an integrated circuit 3 are integrated into the semiconductor device, however, in areas distinct from each other. Contact pads 10 in form of metal pads are accessible for electrically connecting the sensor device.

The integrated circuit 3 may include electronic components for calculating an output signal from the signals delivered by the measuring element 2, for amplifying signals, for digitizing signals, for providing reference voltages, etc..

The semiconductor device includes a substrate 1 on which the measuring element 2 and the integrated circuit 3 are arranged. The substrate 1 may be any suitable substrate for depositing integrated electrical circuitry and measuring elements on.

The integrated circuit 3 may be processed by way of standard CMOS processing technology and may include the processing of one or more of semiconducting, conducting and insulating layers. The measuring element 2 may be processed simultaneously with the integrated circuit 3 and may make use of the subject layers deposited on the substrate 1.

Underneath a region where the measuring element 2 is arranged, the substrate 1 provides for an opening or - as depicted in Fig 2 - a recess 4. Such recess 4 can be achieved by etching the substrate 1 from its back-side by means of a suitable etchant and by using the first insulating layer as an etchant stop.

By etching the recess 4 a membrane 5 is fabricated in the semiconductor device. Note that in the present embodiment the membrane 5 does not extend into the region of the integrated circuit 3. Instead, the substrate 1 fully extends underneath the region of the integrated circuit 3. However, in other embodiments an integrated circuit 3 or at least parts of it may be arranged in a zone close to the membrane 5 where the substrate not necessarily fully supports such zone, but may be of sufficient presence for building an integrated circuit. Such zone may be the region where the substrate slopes towards the membrane 5.

The membrane 5 holds the measuring element 2. The measuring element 2 includes a heater 6 and two meandering thermopiles 7, 8 aligned symmetrically with respect to the heater 6. In operation, the sensor device is arranged with respect to the flow of the medium to be measured such that the medium first passes the first thermopile 7, then the heater 6 and finally the second thermopile 8. The thermopiles 7 and 8 are embodied as temperature sensors. By means of temperature signals provided by the thermopiles 7 and 8 a mass flow of the medium can be determined. Especially, a difference in temperature between the two thermopiles 7 and 8 is a function of the mass flow. The general principle of operation of measuring element 2 is described in more detail in "Scaling of Thermal CMOS Gas Flow Microsensors: Experiment and Simulation" by F. Mayer et al., in Proc. IEEE Micro Electro Mechanical Systems, (IEEE, 1996), pp. 116ff.

In the present embodiment, the measuring element 2 is covered by a first coating 9 which is under tensile stress. The first coating 9 extends beyond the membrane 5 on all sides or at least on two opposite sides of the recess 4. Such overlap provides anchoring for the first coating 9 on the substrate 1 or layers deposited on the substrate 1 for receiving the tension.

The first coating 9 is covered by a second coating 11 which is under compressive stress.

Throughout the present patent application it is understood that tensile stress results from pressure forces acting within the plane of the respective coating / layer in a direction towards a coupling of the membrane 5 with the substrate 1. In turn, compressive stress results from forces acting within the plane of the respective layer / coating in opposite direction than tensile forces, i.e. a direction towards a centre or centreline of the membrane 5.

The first coating 9 exhibiting tensile stress can advantageously comprise or even consist of one of silicon oxide, silicon nitride, a polymer, in particular polyimide, "Diamond Like Carbon" (DLC), polyether ether ketone (PEEK) and silicon. Silicon nitride has been found to be especially suited.

The tensile stress in the first coating 9 can be generated and controlled by suitable choice of manufacturing parameters in known methods, see e.g. U. Münch et al., "Industrial Fabrication Technology for CMOS Infrared Sensor Arrays" in "Transducers '97, International conference on Solid State Sensors and Actuators", IEEE 1997. This quotation teaches how, by suitable selection of the low frequency power and the pressure in a PECVD method, the tensile stress of a layer of oxynitride can be adjusted.

The first coating 9 under tensile stress can also be manufactured by applying a coating material with a thermal expansion coefficient higher than silicon at an elevated temperature onto substrate 1. When cooling the sensor device down, a tensile coating is generated inevitably.

As stress is defined by force per area, the dimensioning of the cross-section of the coating 9 is critical to determine the stress in the coating 9. In most embodiments, any planar design of the coating 9 may be pre-determined such that the height - in the following also called thickness - of such coating 9 may be one of the parameters of choice for doing stress design.

The second coating 11 exhibits compressive stress and protects the underlying measuring element 2. The compressive stress makes the second coating 11 become dense and prevents from pinholes occurring in the second coating by that hindering aggressive media from passing through. This means, that the second coating 11 is less porous than the first coating 9. The second coating 11 comprises silicon nitride or may even consist of silicon nitride.

The second coating 11 is provided for protecting a topmost metal layer in the membrane from corrosion. When operating the sensor device in an ammonia environment, for instance, the second coating 11 provides protection for the measuring element 2 in order to allow for a sustainable use of the sensor device in such chemically aggressive environment.

The compressive stress in the second coating 11 can be generated and controlled by suitable choice of the manufacturing parameters in known methods, see e g. U. Münch et al., "Industrial Fabrication Technology for CMOS Infrared Sensor Arrays" in "Transducers '97, International conference on Solid State Sensors and Actuators", IEEE 1997.

The second coating 11 under compressive stress can also be manufactured by applying a coating material with a thermal expansion coefficient lower than silicon at an elevated temperature onto the substrate 1. When cooling the device down, a compressive coating is generated inevitably.

As stress is defined by force per area, the dimensioning of the cross-section of the coating 11 is critical to determine the stress in the coating 11. In most embodiments, any planar design of the coating 11 may be pre-determined such that the height - in the following also called thickness - of such coating 11 may be one of the parameters of choice for doing stress design.

Focus now is turned to the dimensioning of coatings 9 and 11. The coatings 9 and 11 are preferably designed such that a combined stress in the first coating 9 and the second coating 11 shows tensile stress properties in order to prevent the membrane from being bent or from buckling. Provided the two coatings 9 and 11 are of the same thickness, the combined stress of the two coatings 9 and 11 may be considered as the sum of the individual stress values of the coatings 9 and 11 - i.e. the tensile stress value in the first coating 9 plus the compressive stress value in the second coating 11 - with any compressive stress value being by default a negative value. If the two coatings 9 and 11 are of different thickness, the combined stress of the two coatings 9 and 11 may be considered as the sum of the individual stress values multiplied by the thicknesses of the individual coatings - i.e. the tensile stress value of the first coating 9 multiplied by the thickness of the first coating 9 plus the compressive stress value of the second coating 11 multiplied by the thickness of the second coating 11 - with any compressive stress value being by default a negative value.

In case the coatings 9 and 11 do provide for a different width, the widths need to be reflected in the above equations, too. However, it is preferred that both coatings 9 and 11 do not show different widths when applied to the membrane 5.

The magnitude of the combined tensile stress to be achieved by the combined coatings 9 and 11 is subject to the processing and the materials used, and as such by the compressive stress induced into the membrane 5. On the other hand, the magnitude of the compressive stress to be provided for the second coating 11 is subject to the anticipated use of the sensor device and its exposure to aggressive substances.

For its use in an ammonia environment, for example, an absolute value of the compressive stress of the second coating 11 is preferably not less than 50 MPa for providing sufficient protection to the measuring element 2 and/or other components on/in the membrane 5.Such compressive stress value is advantageously provided in combination with a thickness of the second coating of not less than 100 nm.

Under the assumption that a preferred absolute value of the combined tensile stress of the first and second coating 9 and 11 is not less than 100 MPa for compensating any compressive forces in the membrane 5 induced by substrate 1 during processing, an absolute value of the stand-alone tensile stress of the first coating 9 preferably is not less than 150 MPa. Advantageously, the first coating 9, the second coating 11 and the membrane 5 all have the same thickness, advantageously a thickness not less than 100 nm.

If the thickness of at least one of the coatings 9 and 11 or the membrane 5 is different to the thickness of the other layers, the combined stress of the two coatings 9 and 11 as the tensile stress value of the first coating 9 multiplied by the thickness of the first coating 9 plus the compressive stress value of the second coating 11 multiplied by the thickness of the second coating 11 advantageously is not less than a tensile stress value of the membrane 5 multiplied with the thickness of the membrane 5, and in a preferred embodiment is not less than 150 MPA.

The membrane 5 may comprise multiple layers that are layers used for processing the integrated circuit 3. Therefore, the mechanical properties of these membrane 5 building layers cannot be chosen freely. Still, the overall tensile character of coatings 9 and 11 allow for keeping the membrane 5 taut and for controlling its flexing properties independently from the used manufacturing process while simultaneously the membrane 5 and its components are sufficiently protected.

In Fig. 1 and 2, the coatings 9 and 11 only cover a part of the semiconductor device, namely the part that is meant to be exposed to the medium to be measured. However, the medium may get into touch with the entire top surface of the semiconductor device such that protection for the integrated circuit might be envisaged, too. In such embodiment, the first coating 9 advantageously is limited to a region of the membrane 5 with at least slightly extending the membrane at at least two opposite sides for anchoring purposes. The second coating 11 may advantageously extend over the integrated circuit 2, too, and provide protection from environmental impacts. In the region of the integrated circuit 3, the second coating 11 may be deposited directly on the CMOS layers forming the integrated circuit 3 without the first coating 9 in between for the reason the tensile character of the first coating 9 may exert mechanical stress to the integrated circuit 3 possibly resulting in failures. Advantageously, the entire surface of the semiconductor device may be covered by the second coating 11, except for the contact pads 10.

Using the sensor device other than as a flow detector may include its use as a pressure sensor, in which a pressure difference to be measured is applied over the membrane. It is noted that in such applications the combined coatings 9 and 11 may have impact on the sensitivity of such sensor device. The higher the combined tensile stress and the elastic modulus in coatings 9 and 11 are, the lower the sensitivity becomes. In another application, the sensor device may be used as a humidity sensor.

In the embodiment according to Fig. 1 and 2, a stack is built over the recess 4 formed by the membrane 5, the first coating 9, and the second coating 11. While the membrane 5 may comprise multiple layers itself or may be formed by a single layer and a measuring element and/or components attached thereto, the first coating 9 is provided on top of the membrane 5, either directly or by way of inserting an intermediate layer. In a set-up where the first coating 9 is arranged on top or underneath the membrane 5 the first coating 9 may serve additional purposes. For example, the first coating 9 can even be an active part of the measuring element 2. Its material may offer dielectric or electric properties which vary depending on a parameter to be measured. In a humidity sensor, for example, the dielectric constant or the conductivity of a polymeric tensile coating 9 may vary depending on current humidity. In a substance detector, for example, a tensile coating 9 - provided the coating 9 is exposed to the substance to be measured - may undergo chemical reactions with such substance, or its chemical potential or work function may change. Also optical properties of the tensile coating 9 may be subject to a parameter to be measured.

In the arrangement of Fig. 1 and 2, the second, protective coating 11 under compressive stress is provided on top of the first coating 9. In a standard CMOS manufacturing process such coating 11 is applied to the semiconductor device in a last step and may cover the same completely, again with the exception of the contact pads 10. Thus, the second coating 11 may also protect the structures of the integrated circuit 3.

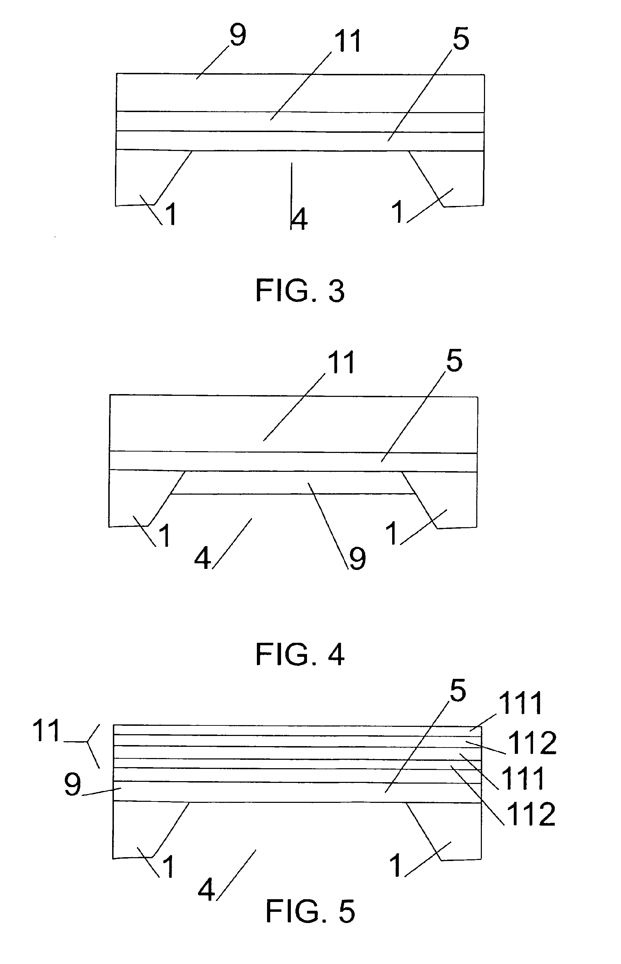

Fig. 3 illustrates a sectional view of a stack of a sensor device according to an embodiment of the present invention. The stack comprises the membrane 5, the second coating 11 and the first coating 9. In this embodiment, the second coating 11 is directly arranged on top of the membrane 5 while the first coating 9 is arranged on top of the second coating 11. It is assumed that the medium to be measured only approaches the top of the stack while the free back-side of the membrane 5 is not exposed to any damaging medium. In this embodiment, the first, tensile coating 9 is the topmost layer and is exposed to the medium. Coating 9 nevertheless can provide its tensile character to the overall stack thereby causing the combined coatings 9 and 11 to counteract any compressive forces in the membrane 5. Additionally, coating 9 may support insulating properties of second coating 11 even if coating 9 as such may not provide sufficient protection to membrane 5.

In the present embodiment, as well as in any other embodiment, it is advantageous to have both coatings 9 and 11 consisting of silicon nitride. Silicon nitride may provide excellent properties in both its tensile and compressive status in view of protection and counteracting compressive forces in the membrane 5.

Irrespective of the present embodiment, a preferred thickness of the second coating is not less than 100 nm. Again, irrespective of the present embodiment a preferred thickness of the first coating is not less than 100 nm.

Figure 4 illustrates a sectional view of a stack of a sensor device according to another embodiment of the present invention. In contrast to the stack in Fig. 3, the first coating 9 now is arranged underneath the membrane 5 which back-side of the membrane 5 again is not exposed to a potentially aggressive medium. In such embodiment, the first coating 9 can counteract any compressive forces induced into the membrane 5. In yet another embodiment, the first coating 9 may even be arranged as a layer within the membrane 5 provided the membrane 5 is embodied as a multi-layer membrane 5.

Figure 5 shows another embodiment of a stack of a sensor device according to an embodiment of the present invention. This stack resembles the stack of Fig. 1 and 2 in that the second coating 11 is arranged on top of the first coating 9. However, the second coating 11 itself encompasses a layer stack comprising layers of silicon nitride 111 and silicon oxide 112 in alternating order. Such layered structure of coating 11 provides advantages in that any pinhole or other defect in one of the layers may be covered by the next layer on top for the reason that it is not very likely that the next layer shows a pinhole or other defect at the same location. A propagation of pinholes from one layer into the next is not very likely either as silicon oxide and silicon nitride grow independently from each other. Consequently, the more layers are provided within the second coating 11 the better the protection is against pinholes.

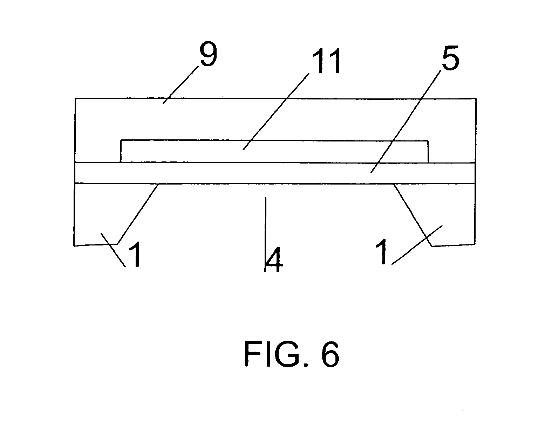

Figure 6 shows another embodiment of a stack of a sensor device according to an embodiment of the present invention. This stack again resembles the stack of Fig. 1, however, the first coating 9 does not fully cover the breadth of the device but only overlaps the breadth of the membrane slightly for anchoring purposes. Still, the second coating 11 extends to the full breadth of the device, and is directly deposited on the CMOS layers where the first coating 9 does not extend very much beyond the membrane 5. The same holds for any region where an integrated circuit is arranged in the semiconductor device: Such region is free from the first coating 9, however, advantageously covered by the second coating 11 in order to provide protection.

The sensor device may comprise an enclosure designed for holding a fluid such as a liquid or a gas.
The measuring element may be arranged such that it is exposed to the fluid to be measured. The enclosure may take the form of a housing, or of a duct. The membrane including the measuring element may be integrated in a wall of such enclosure.

The fluid to be measured advantageously is ammonia, and the parameter of the fluid to be measured advantageously is the mass flow of ammonia.

### Reference List

- 1: Substrate
- 2: Measuring element
- 3: Integrated circuit
- 4: Recess
- 5: Membrane
- 6: Heater
- 7: First thermopile
- 8: Second thermopile
- 9: First coating
- 10: Contact pad
- 11: Second coating
- 111: Silicon nitride layer
- 112: Silicon oxide layer

## Claims

1. Sensor device, comprising
- a membrane (5) with a measuring element (2),
- a first coating (9) under tensile stress, and
- a second coating (11),
**characterized in that** the second coating (11) is under compressive stress and comprises silicon nitride, and that a combined stress of the first and the second coating (9, 11) is of tensile nature.

2. Sensor device of claim 1, wherein the second coating (11) comprises a layer stack, a first layer (111) of which layer stack comprising silicon nitride and a second layer (112) comprising silicon oxide.

3. Sensor device of claim 2, wherein the layer stack comprises multiple layers (111, 112) of silicon nitride and silicon oxide in alternating order.

4. Sensor device of one of the preceding claims, wherein the first coating (9) comprises silicon nitride.

5. Sensor device of one of the preceding claims, wherein the membrane (5), the first coating (9) and the second coating (11) are arranged in a stack.

6. Sensor device of claim 6, wherein the first coating (9) is arranged between the membrane (5) and the second coating (11).

7. Sensor device of claim 5, wherein the second coating (11) is arranged between the membrane (5) and the first coating (9).

8. Sensor device of one of the preceding claims, wherein a thickness of the second coating (11) is not less than 100nm.

9. Sensor device of one of the preceding claims, wherein an absolute value of the compressive stress of the second coating (11) is not less than 50 MPa.

10. Sensor device of one of the preceding claims, wherein an absolute value of the tensile stress of the first coating (9) is not less than 100 MPa.

11. Sensor device of one of the preceding claims, wherein an absolute value of the combined stress is not less than 100 MPa.

12. Sensor device of one of the preceding claims, comprising a semiconductor device including an integrated circuit (3), wherein the second coating (11) covers at least a part of the integrated circuit (3).

13. Sensor device of claim 12, wherein the first coating (9) does not extend over the integrated circuit (3).

14. Sensor device of one of the preceding claims, comprising an enclosure designed for holding ammonia, wherein the measuring element (2) being arranged for measuring an ammonia related parameter.

15. Use of a sensor device of one of the preceding claims as a flow sensor for measuring the flow of ammonia.
